# EUROPÄISCHE PATENTSCHRIFT

(11) **EP 3 230 114 B1**
(45) Veröffentlichungstag und Bekanntmachung des Hinweises auf die Patenterteilung: **11.03.2020**
(21) Anmeldenummer: 14816203.5
(22) Anmeldetag: 12.12.2014
(51) Int. Cl.: B62H 5/00, B60L 53/18, B60L 53/16

(54) **SICHERUNGSVORRICHTUNG UND BEFESTIGUNGSVORRICHTUNG ZUM SICHERN VON FAHRZEUGEN**
SECURING DEVICE AND FASTENING DEVICE FOR SECURING VEHICLES
DISPOSITIF DE SÉCURITÉ ET DISPOSITIF DE FIXATION PERMETTANT DE PROTÉGER UN VÉHICULE

(43) Veröffentlichungstag der Anmeldung: 18.10.2017
(73) Patentinhaber: Unicorn Energy GmbH, 73525 Schwäbisch Gmünd (DE)
(72) Erfinder: DOERNDORFER, Johannes, 73525 Schwaebisch Gmuend (DE)
(74) Vertreter: DREISS Patentanwälte PartG mbB
(86) Internationale Anmeldenummer: PCT/EP2014/077534
(87) Internationale Veröffentlichungsnummer: WO 2016/091319

(56) Entgegenhaltungen:
- WO-A1-2012/107448
- FR-A1- 2 991 658
- JP-A- 2006 035 911
- JP-A- 2012 056 341
- US-A1- 2010 228 405

## Beschreibung

Die vorliegende Erfindung betrifft eine Sicherungsvorrichtung für ein Fahrzeug, insbesondere für ein Fahrrad und/oder ein Elektrofahrrad, mit den Merkmalen des Oberbegriffs von Anspruch 1.

Die vorliegende Erfindung betrifft ferner eine Befestigungsvorrichtung zum Sichern von Fahrzeugen, insbesondere von Fahrrädern und/oder Elektrofahrrädern, die Bestandteil eines Sicherungssystems bildet..

Die vorliegende Erfindung betrifft ferner ein Sicherungssystem zum mechanischen Sichern von Fahrzeugen, insbesondere von Fahrrädern, mit einer Sicherungsvorrichtung, die mit einem Fahrzeug verbunden ist und mit einer Befestigungsvorrichtung, die einen Teil einer ortsfesten Station bildet.

Derartige Sicherungsvorrichtungen dienen dazu, ein Fahrzeug, insbesondere ein Fahrrad, an einer entsprechenden Befestigungsvorrichtung, insbesondere einer ortsfesten Befestigungsstation, festzulegen, um ein nicht autorisiertes Benutzen des Fahrzeugs zu verhindern.

Aus dem Stand der Technik ist es allgemein bekannt, Fahrzeuge, insbesondere Fahrräder, mit einem elektrischen Antrieb an zentralen Ladestationen anzuschließen, um einen elektrischen Energiespeicher des Fahrrads mit elektrischer Energie zu versorgen und aufzuladen. Es ist weiterhin bekannt, die Fahrräder an der Ladestation mittels eines kombinierten Lade-Schloss-Kabels elektrisch mit der Ladestation zu verbinden und gleichzeitig mechanisch an der Ladestation zu sichern, um die Fahrräder vor Diebstahl zu schützen. Ein entsprechendes System ist beispielsweise aus der DE 10 2010 048 338 A1 bekannt. FR 2 991 658 A1 zeigt eine Sicherungsvorrichtung mit Merkmalen des Oberbegriffs von Anspruch 1.

Es ist weiterhin bekannt, über das Ladekabel Daten mit der Ladestation auszutauschen, um beispielsweise ein Bezahlungssystem zum Bezahlen der übertragenen elektrischen Energie bereitzustellen oder andere fahrzeugrelevante Daten zu übermitteln.

Nachteilig bei den bekannten Lade-Schloss-Kabeln und Lade-Schloss-Systemen ist es, dass die Datenübermittlung kompliziert ist und standardisierte Datenkabel und Datenstecker benötigen, um ein universelles Laden und eine universelle Datenübertragung zu bieten. Weiterhin ist es nachteilig, dass die vielfache Verbindung der Datenstecker mit der Station zu einer Abnutzung der Steckverbindung und somit dauerhaft zu einer Beschädigung führt.

Es ist daher die Aufgabe der vorliegenden Erfindung, eine Sicherungsvorrichtung für ein Fahrzeug bereitzustellen, die eine vereinfachte und universelle Sicherung des Fahrzeugs mit der Station bietet. Es ist ferner die Aufgabe der vorliegenden Erfindung, ein entsprechendes verbessertes Sicherungssystem zum mechanischen Sichern von Fahrzeugen bereitzustellen.

Diese Aufgabe wird durch eine Sicherungsvorrichtung mit den Merkmalen des Anspruchs 1 gelöst.

Diese Aufgabe wird durch ein Sicherungssystem zum mechanischen Sichern von Fahrzeugen mit den Merkmalen des Anspruchs 10 gelöst.

Prinzipiell ist das Verbindungselement der Sicherungsvorrichtung dazu ausgebildet, mit dem Verbindungselement der Befestigungsvorrichtung eine Verbindungseinheit zu bilden und entsprechend an der Befestigungsvorrichtung mittels der Verriegelungsvorrichtung festgelegt zu werden, um eine mechanisch feste Verbindung zwischen der Befestigungsvorrichtung und dem Fahrzeug zu bilden, so dass das Fahrzeug entsprechend vor einer nicht autorisierten Benutzung geschützt ist. Dadurch, dass die Sicherungsvorrichtung die Übertragungseinheit als Funkübertragungseinheit aufweist und die Befestigungsvorrichtung die Empfangseinheit als Funkempfangseinheit aufweist, können zwischen der Sicherungsvorrichtung und der Befestigungsvorrichtung die Signale als Funksignale übertragen bzw. ausgetauscht werden, so dass eine technisch aufwendige, komplizierte und anfällige Datenübertragung mittels Datensteckern bzw. Datenleitungen entfällt und eine komfortable, einfache und universelle Datenübertragung zwischen der Sicherungsvorrichtung und der Befestigungsvorrichtung möglich ist.

Die Verbindungseinheit ist als Steckverbindung ausgebildet. Die Steckverbindung weist insbesondere einen Steckverbinder und eine Steckbuchse auf.

Dadurch können die beiden Verbindungsglieder mit geringem Aufwand präzise miteinander verbunden werden.

In einer bevorzugten Ausführungsform der Sicherungsvorrichtung ist die Übertragungseinheit mit einem mobilen Bus-System des Fahrzeugs verbunden.

Dadurch können entsprechend Daten von unterschiedlichen elektrischen Elementen und Systemen des Fahrzeugs mit der Station ausgetauscht werden. In einer besonders bevorzugten Ausführungsform ist das Bus-System des Fahrzeugs als CAN-Datenbus ausgebildet, wodurch ein einfacher standardisierter Datenaustausch zwischen unterschiedlichen elektrischen Systemen des Fahrzeugs und der Station möglich ist.

Dabei ist es besonders bevorzugt, wenn die Übertragungseinheit eine äußere Schnittstelle des mobilen Bus-Systems bildet. Insbesondere bildet die Übertragungseinheit ein Gateway als äußere Schnittstelle des mobilen Bus-Systems, wobei im angeschlossenen Zustand der Sicherungsvorrichtung die Übertragungseinheit ein Gateway zwischen zwei unterschiedlichen Bus-Systemen und insbesondere ein Gateway zwischen zwei separaten CAN-Bus-Systemen bildet.

Dadurch ist eine definierte Schnittstelle zwischen dem mobilen Bus-System des Fahrzeugs und einem stationären Bus-System möglich, die einen definierten Austausch von Daten ermöglicht.

Weiter weist die Sicherungsvorrichtung eine Steuereinheit auf, die mit der Übertragungseinheit verbunden ist, um die Signalübertragung zu steuern.

Dadurch kann mit technisch geringem Aufwand eine zuverlässige Übertragung von Daten von dem Verbindungselement auf das komplementäre Verbindungselement ermöglicht werden.

Es ist weiterhin bevorzugt, wenn die Übertragungseinheit als Nahfeldfunkeinheit ausgebildet ist.

Dadurch können die Funksignale von der Übertragungseinheit auf benachbarte oder nahe Empfangseinheiten übertragen werden, so dass eine geringe elektrische Leistung für die Funkübertragung notwendig ist und gleichzeitig umliegende elektrische Geräte nicht beeinflusst werden.

Es ist weiterhin bevorzugt, wenn die Übertragungseinheit und die Steuereinheit dazu ausgebildet sind, Identifikationsdaten der Sicherungsvorrichtung und/oder des Fahrzeugs zu übertragen.

Dadurch kann die Sicherheit des verbundenen Fahrzeugs weiterhin erhöht werden, da eine Speicherung der Verbindungszeiträume des jeweiligen Fahrzeugs möglich ist.

Vorzugsweise sind die Identifikationsdaten in einem Speicher in dem Verbindungselement gespeichert, das der Steuereinheit zugeordnet ist.

Außerdem weist die Übertragungseinheit eine Spule auf, die dazu ausgebildet ist, die Funksignale zu übertragen.

Dadurch kann mit technisch geringem Aufwand eine effektive Übertragung der Funksignale gewährleistet werden.

Zudem ist die Spule mit der Steuereinheit elektrisch verbunden, um die Steuereinheit mit elektrischer Energie zu versorgen.

Dadurch kann mit technisch geringem Aufwand eine elektrische Energieversorgung der Steuereinheit gewährleistet werden und gleichzeitig auf einen gesonderten Energiespeicher in der Sicherungsvorrichtung bzw. in dem Verbindungselement verzichtet werden.

Es ist weiterhin bevorzugt, wenn die Sicherungsvorrichtung wenigstens eine Datenleitung aufweist, die parallel zu dem langgestreckten Sicherungselement geführt ist, wobei die Steuereinheit mit der Datenleitung verbunden ist und dazu ausgebildet ist, die Verbindung des Verbindungselements mit dem Verbindungsabschnitt über die Datenleitung zu prüfen.

Dadurch kann ein Durchtrennen des Sicherungselements von der Steuereinheit erfasst werden, da die parallel zu dem Sicherungselement geführte Datenleitung zusammen mit dem Sicherungselement durchtrennt werden muss, so dass ein entsprechend unautorisiertes Entfernen des Fahrzeugs erfasst werden kann. In einer einfachen Ausführungsform wird zur Prüfung der Verbindung zwischen dem Verbindungselement und dem Verbindungsabschnitt lediglich eine elektrische Durchgangsprüfung durchgeführt.

In einer bevorzugten Ausführungsform ist die Steuereinheit dazu ausgebildet, eine Unterbrechung der Verbindung des Verbindungselements mit dem Verbindungsabschnitt zu erfassen und ein entsprechendes Signal über die Übertragungseinheit an eine Empfangseinheit des komplementären Verbindungselements zu übermitteln.

Dadurch kann ein nicht autorisiertes Entfernen des Fahrzeugs gemeldet werden und entsprechend Maßnahmen wie z.B. ein Alarm oder eine Videoaufzeichnung initiiert werden.

In einer bevorzugten Ausführungsform weist die Sicherungsvorrichtung eine Mehrzahl von elektrischen Leitungen auf, die jeweils mit einem elektrischen Kontakt des Verbindungselements und mit einem elektrischen Kontakt des Verbindungsabschnitts verbunden sind, um elektrische Energie auf einen Energiespeicher des Fahrzeugs zu übertragen oder mit einem Energiespeicher des Fahrzeugs auszutauschen.

Dadurch kann über die Sicherungsvorrichtung gleichzeitig elektrische Energie auf den Energiespeicher des Fahrzeugs oder von dem Energiespeicher des Fahrzeugs übertragen werden, so dass der Energiespeicher des Fahrzeugs im gesicherten Zustand geladen oder entladen werden kann.

Es ist weiterhin bevorzugt, wenn der Verbindungsabschnitt dazu ausgebildet ist, an dem Fahrzeug festgelegt zu werden und mit dem Fahrzeug eine mechanisch feste Verbindung zu bilden.

Dadurch kann die Sicherungsvorrichtung eine feste Einheit mit dem Fahrzeug bilden, so dass ein einfaches Verbinden mit dem komplementären Verbindungselement eine sichere und mechanisch feste Verbindung des Fahrzeugs zu einer stationären Sicherungsstation bildet.

Außerdem weist der Verbindungsabschnitt ein komplementäres Verbindungselement mit einer Verriegelungsvorrichtung auf, um den Verriegelungsabschnitt des Verbindungselements an dem Verbindungsabschnitt festzulegen.

Dadurch kann das Verbindungselement zum einen sicher und mechanisch stabil an dem Fahrzeug befestigt werden und gleichzeitig kann eine universelle Sicherungsvorrichtung bereitgestellt werden, da das langgestreckte Sicherungselement lediglich um einen ortsfesten Gegenstand herumgeführt werden muss, um das Fahrzeug zu sichern.

Weiter weist der Verbindungsabschnitt eine Funkempfangseinheit auf, um Funksignale zu empfangen.

Dadurch kann ein entsprechendes Signal auf den Verbindungsabschnitt übertragen werden, um beispielsweise ein Öffnen und ein Schließen der Verriegelungsvorrichtung zu initiieren.

Weiterhin ist die Verriegelungsvorrichtung als elektrisch betätigbare Verriegelungsvorrichtung ausgebildet.

Dadurch kann der Verriegelungsabschnitt einfach und sicher an dem Verbindungsabschnitt festgelegt werden.

Es ist weiterhin bevorzugt, wenn die Übertragungseinheit als Sende-und Empfangseinheit ausgebildet ist, um Funksignale zu senden und zu empfangen.

Dadurch ist ein zweiseitiger Austausch von Daten zwischen dem Verbindungselement und dem komplementären Verbindungselement möglich, so dass ein beliebiger Austausch von Informationen möglich ist.

In einer bevorzugten Ausführungsform weist die Befestigungsvorrichtung ein Gehäuse auf, das eine ortsfeste Sicherungsstation bildet.

Dadurch kann eine ortsfeste Verbindung für die Sicherungsvorrichtung bereitgestellt werden, so dass das Fahrzeug an der Befestigungsvorrichtung sicher und ortsfest festgelegt werden kann.

Es ist weiterhin bevorzugt, wenn die Empfangseinheit mit einem ortsfesten Bus-System verbunden ist.

Dadurch können mit technisch geringem Aufwand Steuerdaten mit unterschiedlichen elektrischen Systemen der Befestigungsvorrichtung ausgetauscht werden, wodurch ein universelles und beliebig erweiterbares System gebildet werden kann.

Es ist dabei besonders bevorzugt, wenn die Empfangseinheit eine äußere Schnittstelle zu dem ortsfesten Bus-System bildet.

Dadurch kann eine definierte und zuverlässige Schnittstelle zu einem mobilen Bus-System bereitgestellt werden, wodurch ein zuverlässiger Austausch von Daten über die Empfangseinheit möglich ist.

Es ist weiterhin bevorzugt, wenn das Bus-System ein CAN-Bus-System ist. Dadurch ist ein standardisierter Datenaustausch mit dem Fahrzeug möglich.

Es ist weiterhin bevorzugt, wenn die Funkempfangseinheit eine äußere Schnittstelle des Bus-Systems und insbesondere ein Gateway des CAN-Buses bildet.

Es ist weiterhin bevorzugt, wenn der Empfangseinheit eine Steuereinheit zugeordnet ist, um die empfangenen Funksignale zu verarbeiten.

Dadurch ist eine zuverlässige Übertragung von Funksignalen mit technisch geringem Aufwand möglich.

Es ist weiterhin bevorzugt, wenn die Verriegelungsvorrichtung als elektrisch betätigbare Verriegelungsvorrichtung ausgebildet ist.

Dadurch kann die Verriegelungsvorrichtung zuverlässig und mit technisch geringem Aufwand komfortabel geschlossen und geöffnet werden.

Dabei ist es besonders bevorzugt, wenn die Steuereinheit mit der Verriegelungsvorrichtung verbunden ist, um die Verriegelungsvorrichtung zu betätigen. [0062] Dadurch kann ein sicheres und autorisiertes Öffnen und Schließen der Verriegelungsvorrichtung ermöglicht werden.

Es ist dabei besonders bevorzugt, wenn der Steuereinheit eine Eingabeeinheit zugeordnet ist, um der Steuereinheit ein Steuersignal zuzuführen, und wobei die Steuereinheit dazu ausgebildet ist, auf der Grundlage des Steuersignals die Verriegelungsvorrichtung zu betätigen.

Dadurch kann die Verriegelungsvorrichtung komfortabel und gleichzeitig sicher betätigt werden, so dass ein komfortables und zuverlässiges Öffnen und Schließen der Verriegelungsvorrichtung möglich ist.

Es ist dabei besonders bevorzugt, wenn die Eingabeeinheit eine Funkeingabeeinheit ist bzw. durch die Funkempfangseinheit gebildet ist, so dass ein Öffnen der Verriegelungsvorrichtung beispielsweise durch einen mobilen Transponder insbesondere mittels RFID oder durch eine mobile Funkvorrichtung wie z.B. ein Mobiltelefon möglich ist.

Es ist weiterhin bevorzugt, wenn die Empfangseinheit eine Spule aufweist, um die Funksignale zu empfangen und elektrische Energie auf das komplementäre Verbindungselement zu übertragen.

Dadurch kann zum einen mit technisch geringem Aufwand eine Antenne bereitgestellt werden und gleichzeitig die Antenne genutzt werden, um elektrische Energie auf das komplementäre Verbindungselement zu übertragen, so dass in dem komplementären Verbindungselement eine elektrische Energieversorgung mit technisch geringem Aufwand möglich ist.

Es ist weiterhin bevorzugt, wenn das Verbindungselement eine Mehrzahl von elektrischen Kontakten aufweist, um elektrische Energie mit einem elektrischen Energiespeicher von Fahrzeugen auszutauschen. Die Kontakte sind vorzugsweise über eine Mehrzahl von elektrischen Leitungen mit einer elektrischen Energiequelle oder einem elektrischen Netz bzw. einer elektrischen Energiesenke verbunden sind, um elektrische Energie an den Kontakten bereitzustellen oder an den Kontakten aufzunehmen.

Dadurch kann die Befestigungsvorrichtung gleichzeitig als Station zum Austauschen von elektrischer Energie mit einem elektrischen Energiespeichern von Fahrzeugen dienen. Die Ladestation kann insbesondere zum Aufladen von elektrischen Energiespeichern von Fahrzeugen dienen, wenn elektrische Energie an den Kontakten bereitgestellt wird und als Station zum Entladen von elektrischen Energiespeichern von Fahrzeugen dienen, wenn elektrische Energie an den Kontakten aufgenommen wird.

Es ist weiterhin bevorzugt, wenn die Empfangseinheit mit einem stationären Datennetz verbunden ist.

Dadurch ist ein Austausch von Daten über die Empfangseinheit mit einer Datenbank, insbesondere einer Datenbank, die über das Internet erreichbar ist, möglich. Dadurch können umfangreiche Dienste über die Empfangseinheit kontaktiert bzw. bereitgestellt werden.

Es ist weiterhin bevorzugt, wenn die Empfangseinheit über das stationäre Datennetz mit einer Datenbank verbunden oder verbindbar ist.

Dadurch können nutzungsabhängige Daten zentral technisch und /oder wirtschaftlich ausgewertet werden.

Es ist weiterhin bevorzugt, wenn die Empfangseinheit als Sende- und Empfangseinheit ausgebildet ist, um Funksignale zu empfangen und zu übertragen.

Dadurch kann eine universelle Datenschnittstelle bereitgestellt werden, da sowohl Daten empfangen als auch Daten übertragen werden können.

Insgesamt kann durch die Sicherungsvorrichtung und die Befestigungsvorrichtung eine sichere Verbindung zwischen dem Fahrzeug und einer ortsfesten Station gebildet werden, wobei insbesondere Daten zur Identifikation des Fahrzeugs übertragen werden können, elektrische Energie auf einen Energiespeicher des Fahrzeugs übertragen werden kann und insgesamt ein unautorisiertes Entfernen des Fahrzeugs erfasst werden kann. Eine komfortable und sichere Verbindung des Fahrzeugs zu der ortsfesten Station ist dadurch möglich, wobei gleichzeitig auch beispielsweise eine Verbindung zu einer Datenbank möglich ist, wodurch beispielsweise auch eine Bezahlung der übertragenen elektrischen Energie zum Laden eines elektrischen Energiespeichers des Fahrzeugs erfolgen kann.

Ausführungsbeispiele der Erfindung sind in der Zeichnung dargestellt und werden in der nachfolgenden Beschreibung näher erläutert. Es zeigen:
Fig. 1 eine schematische Darstellung eines Fahrrads an einer Sicherungs- und/oder Ladestation;
Fig. 2 eine Steckverbindung mit einem Steckverbinder und einer Steckbuchse zum Verbinden des Fahrrades mit der Sicherungs- und/oder Ladestation;
Fig. 3 eine schematische Darstellung der Steckverbindung aus Fig. 2;
Fig. 4 eine schematische Schnittansicht des Steckverbinders;
Fig. 5 eine perspektivische Darstellung des Steckverbinders mit Sicherungskabel und Verbindungsabschnitt;
Fig. 6 eine Explosionsdarstellung der Steckbuchse der Sicherungs- und/oder Ladestation zusammen mit dem Steckverbinder;
Fig. 7a, b eine einfachste Ausführungsform des Steckverbinders;
Fig. Ausführungsformen des Steckverbinders;
Fig. 9 eine perspektivische Ansicht einer Sicherungsvorrichtung
   verbindet und Verbindungsabschnitt;
Fig. 10 eine perspektivische Darstellung der Sicherungsvorrichtung aus Fig. 9 in angebautem Zustand;

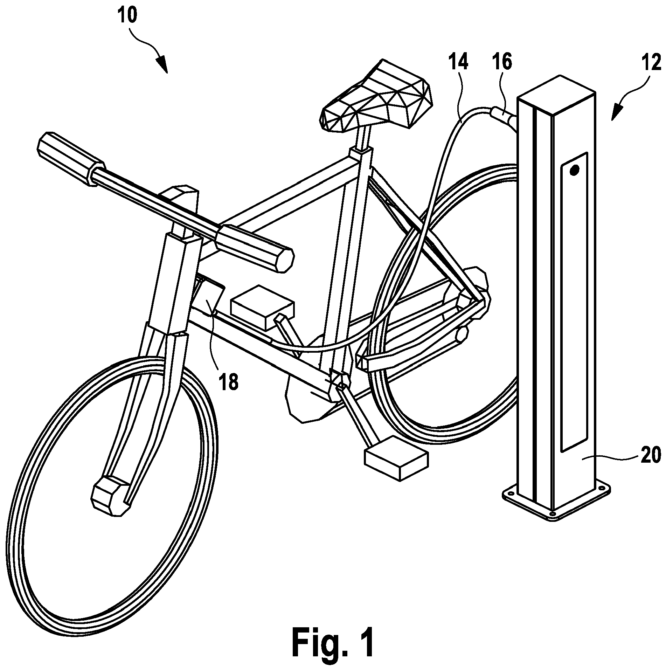

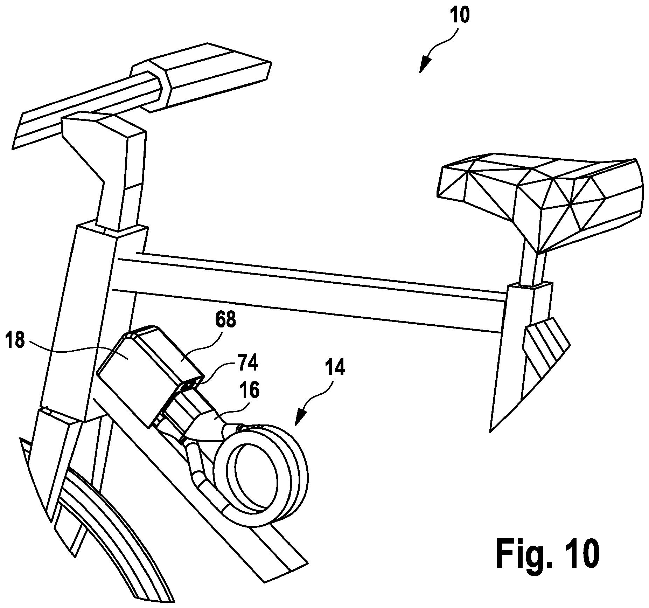

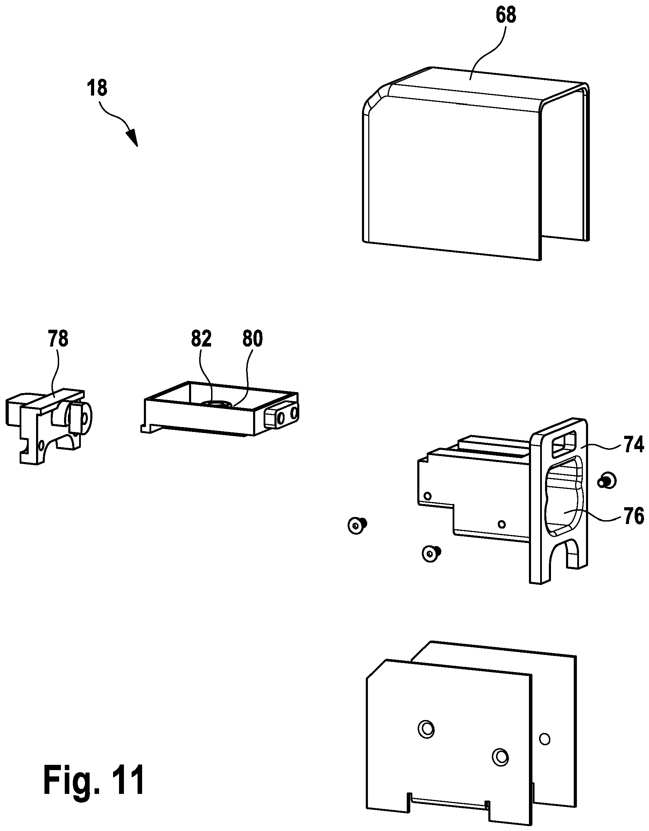

Fig. 1 1 eine perspektivische Explosionsdarstellung des Verbindungsabschnitts der Sicherungsvorrichtung aus Fig. 10; und

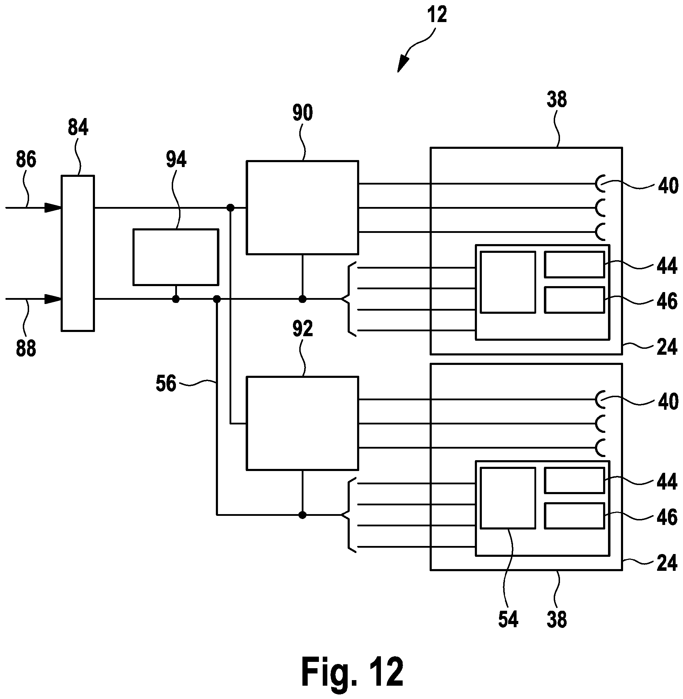

Fig. 12 eine schematische Blockdarstellung einer Sicherungs- und/oder Ladestation für eine Mehrzahl von Fahrrädern.

In Fig. 1 ist eine perspektivische Ansicht eines Fahrrads an einer Sicherungs- und/oder Ladestation schematisch dargestellt. Das Fahrrad ist allgemein mit 10 bezeichnet und die Sicherungs- und/oder Ladestation ist allgemein mit 12 bezeichnet. Das Fahrrad 10 weist eine Sicherungsvorrichtung 14 auf, über die das Fahrrad 10 fest und lösbar mit der Sicherungs- und/oder Ladestation 12 verbunden ist. Die Sicherungsvorrichtung 14 bildet eine Diebstahlsicherung für das Fahrrad 10 und ist als langgestreckte flexible Sicherungsvorrichtung mit einem Verbindungsstecker 16 ausgebildet, der mit einer hier nicht dargestellten Steckbuchse der Sicherungs- und/oder Ladestation 12 lösbar verbindbar ist. Die Sicherungsvorrichtung 14 ist mittels eines Verbindungsabschnitts 18 fest mit dem Fahrrad 10 verbunden, so dass die Sicherungsvorrichtung 14 eine mechanische Verbindung zwischen dem Fahrrad 10 und der Sicherungs- und/oder Ladestation 12 bildet.

In der in Fig. 1 dargestellten Ausführungsform weist das Fahrrad 10 lediglich einen Tretkurbelantrieb auf, so dass die Sicherungsvorrichtung 14 in dieser Ausführungsform lediglich zur Sicherung des Fahrrads 10 dient und eine Diebstahlsicherung für das Fahrrad 10 bildet. In einer alternativen Ausführungsform kann das Fahrrad 10 auch einen Elektroantrieb mit einem entsprechenden elektrischen Energiespeicher aufweisen, wobei die Sicherungsvorrichtung 14 dann sowohl als Diebstahlsicherung als auch als Kabel zum Austauschen von elektrischer Energie mit dem elektrischen Energiespeicher dient. Die Sicherungs- und/oder Ladestation 12 kann entsprechend sowohl lediglich eine mechanische Sicherungsstation als auch eine Sicherungs- und Ladestation zum Aufladen oder Entladen des elektrischen Energiespeichers bilden. Die Sicherungs- und/oder Ladestation 12 ist, wie es in Fig. 1 dargestellt ist, eine ortsfeste Station mit einem entsprechenden Gehäuse 20, das ortsfest im Erdboden verankert ist.

Der Steckverbinder 16 weist eine Funkübertragungseinheit auf und die Sicherungs- und/oder Ladestation 12 weist eine entsprechende Funkempfangseinheit auf, so dass von dem Steckverbinder 16 der Sicherungsvorrichtung 14 Daten, insbesondere zur Identifikation des Fahrrads 10, an die Sicherungs- und/oder Ladestation 12 übermittelt werden können. Im Allgemeinen kann durch eine Steuereinheit in der Sicherungsvorrichtung 14 ein Durchtrennen der Verbindung zwischen dem Steckverbinder 16 und dem Verbindungsabschnitt 18 erfasst und über die Funkübertragungseinheit an die Sicherungs- und/oder Ladestation 12 übermittelt werden, so dass ein entsprechender Diebstahl des Fahrrads 10 erfasst und übermittelt werden kann. Dadurch können beispielsweise Kameras aktiviert werden oder ein Zeitpunkt des Diebstahls gespeichert werden, so dass eine entsprechende Rückverfolgung des Diebstahls möglich ist. Durch die Funkübertragung der Daten von dem Steckverbinder 16 auf die Sicherungs- und/oder Ladestation 12 kann eine zuverlässige und universelle Datenübertragung gewährleistet werden, so dass unabhängig von einem bestimmten Steckersystem Daten übermittelt werden können.

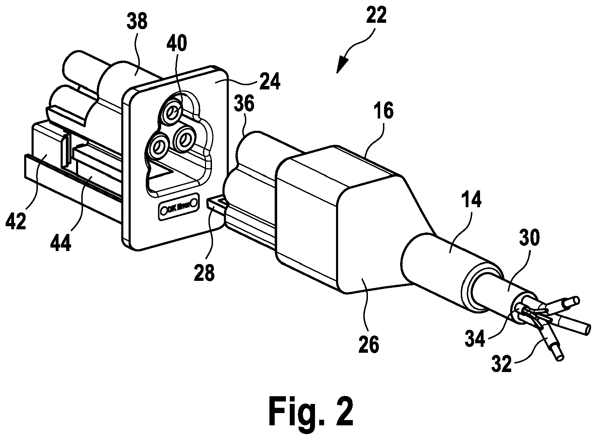

In Fig. 2 ist eine Steckverbindung zwischen der Sicherungsvorrichtung 14 und der Sicherungs- und/oder Ladestation 12 perspektivisch dargestellt und allgemein mit 22 bezeichnet. Die Steckverbindung 22 wird gebildet durch den Steckverbinder 16 der Sicherungsvorrichtung 14 und eine Steckbuchse 24 der Sicherungs- und/oder Ladestation 12.

Die Steckverbindung 22 ist in der hier dargestellten Ausführungsform sowohl zur Sicherung des Fahrrads 10 an der Sicherungs- und Ladestation 12 ausgebildet als auch zum Aufladen oder Entladen des Energiespeichers wie es im Weiteren näher erläutert ist.

Der Steckverbinder 16 weist ein Gehäuse 26 auf, in dem die hier nicht näher dargestellte Funkübertragungseinheit angeordnet ist, um Daten von der Sicherungsvorrichtung 14 auf die Sicherungs- und/oder Ladestation 12 zu übertragen. Der Steckverbinder 16 weist einen Verriegelungsabschnitt 28 auf, der teilweise in dem Gehäuse 26 angeordnet ist, um den Steckverbinder 16 in der Steckbuchse 24 festzulegen und entsprechend zu sichern. Die Sicherungsvorrichtung 14 weist ferner ein langgestrecktes Sicherungselement 30 auf, das eine flexible mechanische Verbindung bildet und vorzugsweise als Stahlseil oder Stahlkette ausgebildet ist. Parallel zu dem Sicherungselement 30 sind in dieser Ausführungsform ferner drei elektrische Leitungen 32 zur Übertragung von elektrischer Energie angeordnet, die Kontakte des Steckverbinders 16 mit dem elektrischen Energiespeicher verbinden, um diesen entsprechend elektrisch zu laden oder zu entladen. Ferner sind eine Mehrzahl von Datenleitungen 34 parallel zu dem Sicherungselement 30 angeordnet bzw. geführt, um Datensignale von dem Fahrrad 10 bzw. von elektrischen Komponenten des Fahrrads 10 auf die Sicherungs- und/oder Ladestation 12 im Allgemeinen zu übertragen, und zwar mittels der Funkübertragungseinheit. Die Datenleitungen 34 dienen ferner dazu ein Durchtrennen des Sicherungselements 30 zu erfassen und entsprechend mittels der Funkübertragungseinheit an die Sicherungs- und/oder Ladestation 12 zu übertragen. Der Steckverbinder 16 weist ferner eine Mehrzahl von elektrischen Kontakten 36 auf, die elektrisch mit den elektrischen Leitungen 32 verbunden sind, um elektrische Energie auf dem elektrischen Energiespeicher des Fahrrads 10 zu übertragen.

Die Steckbuchse 24, die komplementär zu dem Steckverbinder 16 ausgebildet ist und entsprechend derart geformt ist, dass der Steckverbinder 16 in die Steckbuchse 24 eingesteckt werden kann, weist ein Gehäuse 38 auf, in dem elektrische Kontakte 40 angeordnet sind. Die elektrischen Kontakte 40 sind entsprechend mit einer elektrischen Energiequelle verbunden oder verbindbar, um elektrische Energie an den elektrischen Kontakten 40 bereitzustellen und so entsprechend einen elektrischen Energiespeicher des Fahrrads 10 zu laden. In dem Gehäuse 38 ist ferner eine Verriegelungsvorrichtung 42 aufgenommen, die dazu ausgebildet ist, den Verriegelungsabschnitt 28 entsprechend zu verriegeln bzw. festzulegen, um so eine mechanische feste Verbindung zwischen dem Steckverbinder 16 und der Steckbuchse 24 zu bilden. In dem Gehäuse 38 ist ferner eine Funkempfangseinheit 44 angeordnet, die mit der Funkübertragungseinheit des Steckverbinders 16 eine Funkstrecke zur drahtlosen Datenübertragung bildet und entsprechend Daten von dem Steckverbinder 16 empfängt.

Die Verriegelungsvorrichtung 42 ist eine elektrische Verriegelungsvorrichtung und kann entsprechend durch ein elektrisches Signal betätigt, das heißt, geschlossen oder geöffnet werden. Dadurch kann beispielsweise in dieser besonderen Ausführungsform zunächst die Bereitstellung der elektrischen Energie unterbrochen werden, bevor die Verriegelung gelöst und der Steckverbinder 16 aus der Steckbuchse 24 herausgezogen werden kann, so dass die Entstehung von Lichtbögen beim Trennen der elektrischen Kontakte 36, 40 vermieden werden kann.

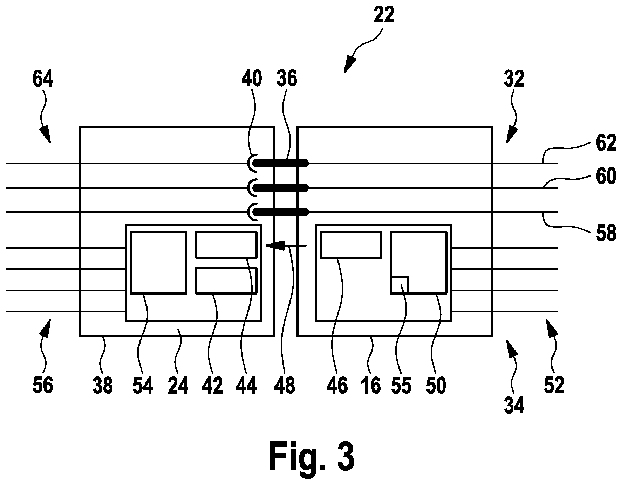

In Fig. 3 ist eine schematische Ansicht der Steckverbindung 22 aus Fig. 2 dargestellt. Gleiche Elemente sind mit gleichen Bezugsziffern bezeichnet, wobei hier lediglich die Besonderheiten erläutert sind.

Der Steckverbinder 16 weist die Funkübertragungseinheit 46 auf, die in dem Gehäuse 26 angeordnet ist, um Daten 48 in Form von Funksignalen auf die Funkempfangseinheit 44 der Steckbuchse 24 zu übertragen. Die Funkübertragungseinheit 46 ist mit einer Steuereinheit 50 und mit den Datenleitungen 34 verbunden, um die Daten 48 entsprechend zu übertragen. Die Datenleitungen 34 bilden dabei Datenleitungen eines mobilen Bus-Systems 52 des Fahrrads 10, das vorzugsweise als CAN-Bus ausgebildet ist.

Entsprechend bildet die Funkübertragungseinheit 46 eine äußere Schnittstelle des Bus-Systems 52 beziehungsweise ein Gateway des CAN-Buses.

Die Funkübertragungseinheit 46 kann auch Identifizierungsdaten zum Identifizieren des Fahrzeugs 10 an die Station 12 übermitteln, wobei die Identifikationsdaten vorzugsweise in einem Speicher 55 in dem Steckverbinder gespeichert sind. Jeder

Steckverbinder 16 weist individuelle Identifizierungsdaten auf, so dass jeder Steckverbinder 16 elektronisch eindeutig identifiziert werden kann. Dadurch kann jedes Fahrrad 10 an der Station 12 elektronisch eindeutig identifiziert werden.

In dem Gehäuse 38 der Steckbuchse 24 ist die Verriegelungsvorrichtung 42 sowie eine Steuereinheit 54 angeordnet, wobei die Steuereinheit 54 die Funkempfangseinheit 44 und die Verriegelungsvorrichtung 42 steuert. Die Steuereinheit 54 und die Funkempfangseinheit 44 ist mit einem stationären Bus-System 56 verbunden, das vorzugsweise als stationärer CAN-Bus ausgebildet ist. Die Funkempfangseinheit 44 bildet entsprechend eine äußere Schnittstelle des Bus-Systems 56 bzw. ein Gateway des stationären CAN-Buses.

Die elektrischen Kontakte 36 des Steckverbinders 16 sind mit den elektrischen Leitungen 32 verbunden, wobei die elektrischen Leitungen durch eine Masseleitung 58 eine erste Spannungsleitung 60 (+ 60 V) sowie optional eine zweite Spannungsleitung 62 (- 120 V) gebildet sind.

Entsprechend sind die elektrischen Kontakte 40 der Steckbuchse 24 mit elektrischen Leitungen 64 verbunden, die mit einer elektrischen Energiequelle bzw. einem Spannungswandler verbunden oder verbindbar sind, um an den elektrischen Kontakten 40 entsprechende elektrische Spannungen und entsprechende elektrische Leistung bereitzustellen. Durch die drei Spannungspotentiale 0V, + 60V, - 120V können drei unterschiedliche Spannungen und zwar 60V, 120V und 180V an den Kontakten bereitgestellt werden.

Durch die drahtlose Übertragung der Daten 48 ist eine universelle Datenschnittstelle zwischen dem Steckverbinder 16 und der Sicherungs- und/oder Ladestation 12 möglich. Ferner kann durch die elektrische Steuerung der Funkübertragungseinheit 46 des Verriegelungsabschnitts 28 auf ein elektrisches Signal wie zum Beispiel ein RFID-Transpondersignal oder ein anderes elektrisches Signal hin freigegeben werden, so dass die Verbindung des Fahrrads 10 mit der Sicherungs- und/oder Ladestation 12 einfach und mit einer entsprechenden Authentifizierung gelöst werden kann. Ferner kann für den Fall, dass die Sicherungsvorrichtung 14 auch zum Laden des elektrischen Energiespeichers verwendet wird, die elektrische Verbindung der elektrischen Kontakte 40 von der Energiequelle getrennt werden, so dass Überspannungen und Lichtbögen beim Trennen des Steckverbinders 16 von der Steckbuchse 24 vermieden werden können.

Das Bus-System 56 kann beispielsweise über das Internet mit einem Cloud-Service verbunden oder verbindbar sein oder mit einer Datenbank und/oder einem Authentifizierungsprogramm verbunden oder verbindbar sein, um beispielsweise eine Bezahlung der elektrischen Energie oder einer Parksicherungsgebühr zu gewährleisten. Die Daten jedes eindeutig identifizierbaren Steckverbinders bzw. jedes Fahrrades werden an die Datenbank übertragen und gespeichert und können statistisch (technisch oder wirtschaftlich) ausgewertet werden. Über die Datenbank können eindeutige Zuordnung von Herstellern, Eigentümern, Nutzern und nutzungsabhängigen Daten erstellt und technisch sowie wirtschaftlich ausgewertet werden.

Über die drahtlose Verbindung können mit den Daten 48 auch elektrische Eigenschaften des Steckverbinders und/oder des angeschlossenen Energiespeichers übertragen werden, wie z.B. max. Spannung, Strom, Leistung, Ladungszustand etc.

In dem Steckverbinder 16 oder an den Datenleitungen 34 kann ferner ein Temperatursensor angeordnet sein, um eine Umgebungstemperatur oder eine Temperatur der Komponenten der Sicherungsvorrichtung 16 zu erfassen. Dadurch können kritische Temperaturen, die durch Überlastung, Defekt, Alterung oder Abnutzung der Komponenten unter unterschiedlichen Rahmenbedingungen entstehen können erfasst und beim übertragen von elektrischer Energie berücksichtigt werden Ferner ist dadurch eine temperaturgeführte Leistungsregelung möglich.

In dem Steckverbinder 16 können ferner Strom-, Spannungs-, und/oder Leistungsmesser integriert sein. Dadurch kann die übertragene Energie ermittelt und eine Sicherheitsüberwachung implementiert werden.

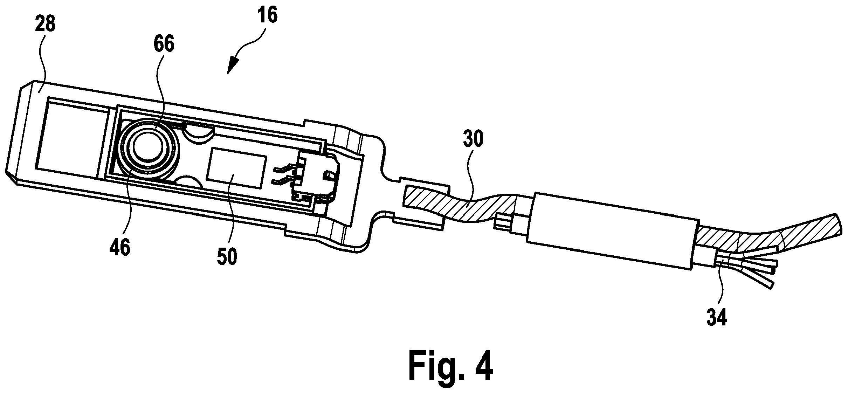

In Fig. 4 ist eine perspektivische Ansicht des Steckverbinders 16 ohne das Gehäuse 26 dargestellt. Gleiche Elemente sind mit gleichen Bezugsziffern bezeichnet, wobei hier lediglich die Besonderheiten erläutert sind.

In der hier dargestellten Ausführungsform weist der Steckverbinder keine elektrischen Kontakte und entsprechend keine elektrischen Leitungen 32 auf. Der Verriegelungsabschnitt 28 ist durch das gesamte Gehäuse 26 geführt und fest mit dem langgestreckten Sicherungselement 30 verbunden, das in dieser Ausführungsform als Stahlseil ausgebildet ist. Dadurch kann eine sichere Verbindung zwischen dem Verriegelungsabschnitt 28 bzw. der Verriegelungsvorrichtung 42 und dem Verbindungsabschnitt 18 gebildet werden, so dass eine sichere mechanische Verbindung zwischen dem Fahrrad und der Sicherungs- und/oder Ladestation 12 bereitgestellt werden kann. Parallel zu dem langgestreckten Sicherungselement 30 sind die Datenleitungen 34 geführt, die sowohl einen Teil des mobilen Bus-Systems 52 bilden als auch zur Erfassung eines Durchtrennens des langgestreckten Sicherungselements 30 dienen. Diese Erfassung kann beispielsweise durch eine einfache elektrische Durchgangsmessung von der Steuereinheit 50 ausgeführt werden.

Die Funkübertragungseinheit 46, die als Nahfeldfunkübertragungseinheit ausgebildet ist, weist eine Spule auf, die ein Antennenelement der Funkübertragungseinheit 46 bildet. Die Funkübertragungseinheit 46 ist vorzugsweise als Sende- und Empfangseinheit ausgebildet, um entsprechend Funksignale zu ertragen und zu empfangen. Die Spule 66 ist ferner mit elektrischen Komponenten in dem Gehäuse 26 des Steckverbinders 16 verbunden, um die elektrischen Elemente wie z.B. die Steuereinheit 50 mit elektrischer Energie zu versorgen.

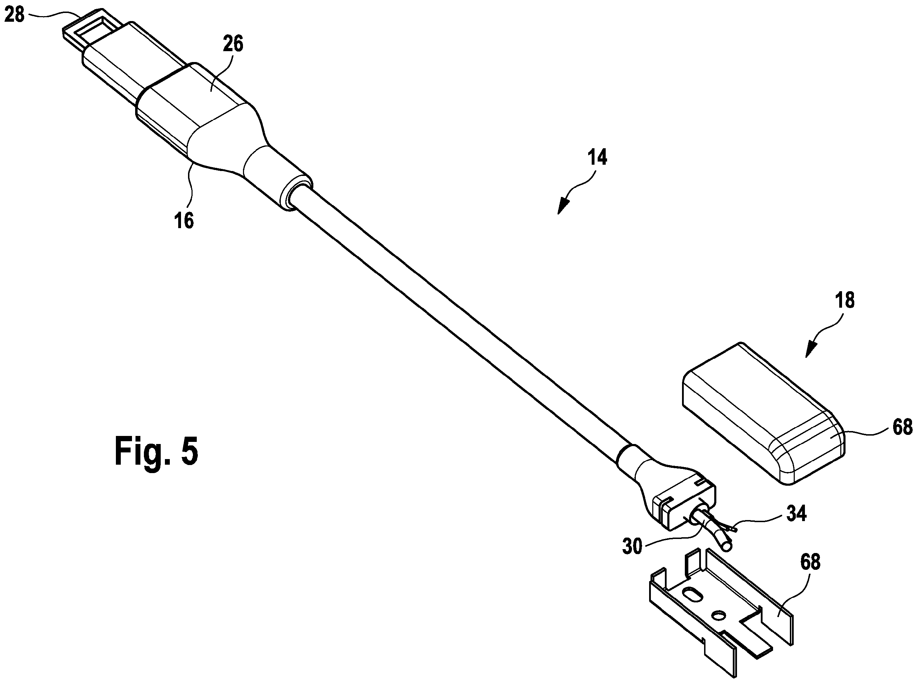

In Fig. 5 ist eine perspektivische Darstellung der Sicherungsvorrichtung 14 dargestellt, wobei die in Fig. 5 dargestellte Ausführungsform keine elektrischen Kontakte 36 aufweist. Gleiche Elemente sind mit gleichen Bezugszeichen bezeichnet, wobei hier lediglich die Besonderheiten erläutert sind.

Der Verbindungsabschnitt 18 weist ein Gehäuse 68 auf, das mit Schrauben fest mit einem Rahmen des Fahrrads 10 verbunden werden kann, wobei ein Ende des Sicherungselements 30 fest mit dem Gehäuse 68 verbunden ist, um so eine mechanisch stabile Verbindung zwischen dem Verbindungsabschnitt 18 und dem Verriegelungsabschnitt 28 zu bilden und entsprechend das Fahrrad 10 sicher an der Sicherungs- und/oder Ladestation 12 festzulegen.

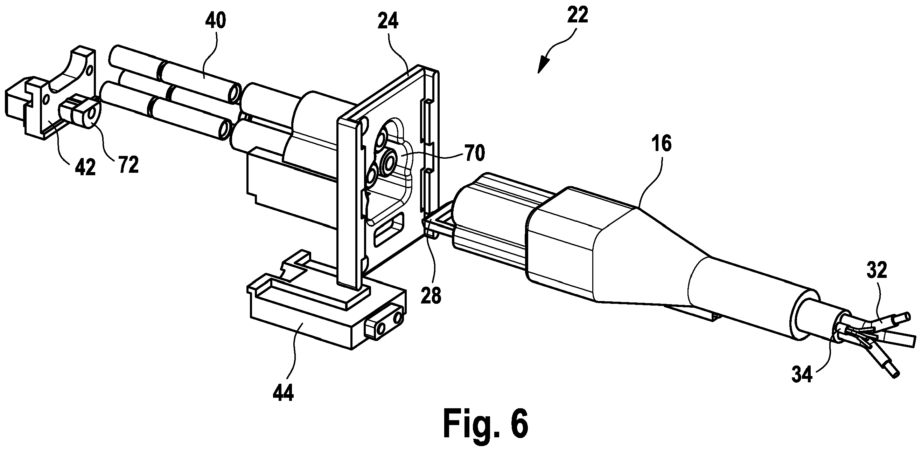

In Fig. 6 ist eine perspektivische Explosionsdarstellung der Steckbuchse 24 zusammen mit dem Steckverbinder 16 dargestellt. Gleiche Elemente sind mit gleichen Bezugszeichen bezeichnet, wobei hier lediglich die Besonderheiten erläutert sind.

Die Funkempfangseinheit 44 ist unterhalb einer Aufnahme 70 für den Steckverbinder 16 angeordnet, so dass die Funkempfangseinheit 44, die vorzugsweise eine Spule als Antennenelement aufweist, im zusammengesteckten Zustand der Steckverbindung 22 direkt unterhalb der Spule 66 des Steckverbinders 16 angeordnet ist, so dass eine ideale Übertragung von elektromagnetischen Wellen möglich ist. Die Funkempfangseinheit 44 ist vorzugsweise als Sende- und Empfangseinheit ausgebildet, um Daten sowohl zu übertragen als auch zu empfangen, so dass zwischen dem Steckverbinder 16 und der Steckbuchse 24 bzw. der Sicherungs- und/oder Ladestation 12 die Daten 48 bidirektional ausgetauscht werden können.

Die Verriegelungsvorrichtung 42 ist unterhalb der Aufnahme 70 für den Steckverbinder 16 angeordnet und weist einen Verriegelungszapfen 72 auf, der in den Verriegelungsabschnitt 28 eingreifen kann, um so ein Lösen des Steckverbinders 16 von der Steckbuchse 24 zu verhindern und eine feste verriegelte Verbindung zwischen dem Steckverbinder 16 und der Steckbuchse 24 zu bilden. Durch die besondere Anordnung der Spule der Funkempfangseinheit 44 kann zusätzlich zu den Daten 48 auch elektromagnetische Energie auf die Spule 66 übertragen werden, so dass die elektrischen Komponenten in dem Gehäuse 26 des Steckverbinders 16 mit elektrischer Energie versorgt werden können.

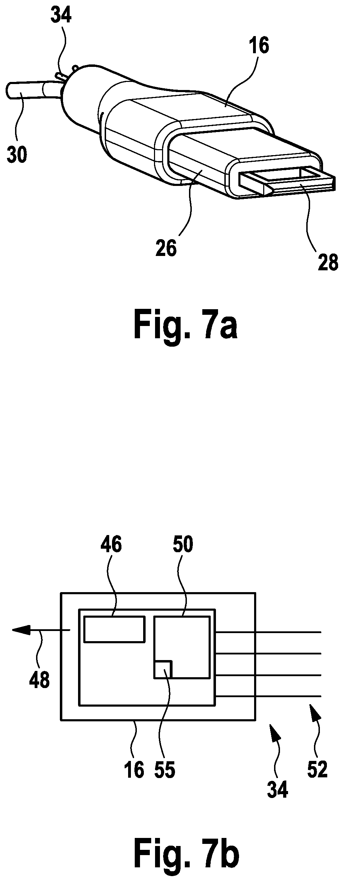

In Fig. 7a ist eine perspektivische Darstellung des Steckverbinders 16 in einer einfachsten Ausführungsform dargestellt. Der Steckverbinder 16 weist lediglich den Verriegelungsabschnitt 28 und die Funkübertragungseinheit 46 auf, um entsprechend die Daten 28 auf die Sicherungs- und/oder Ladestation 12 zu übertragen und entsprechend die Sicherungsvorrichtung 14 fest mit der Sicherungs- und/oder Ladestation 12 zu verbinden. Die Datenleitungen 34, die einen Teil des Bus-Systems 52 bilden, weisen üblicherweise zwei Busleitungen (high, low), eine Niederspannungsleitung sowie eine Erdungsleitung auf.

Die Funkübertragungseinheit 46 ist als Nahfeldfunkübertragungseinheit ausgebildet und überträgt die Daten 48 auf die Sicherungs- und/oder Ladestation 12 wie oben beschrieben.

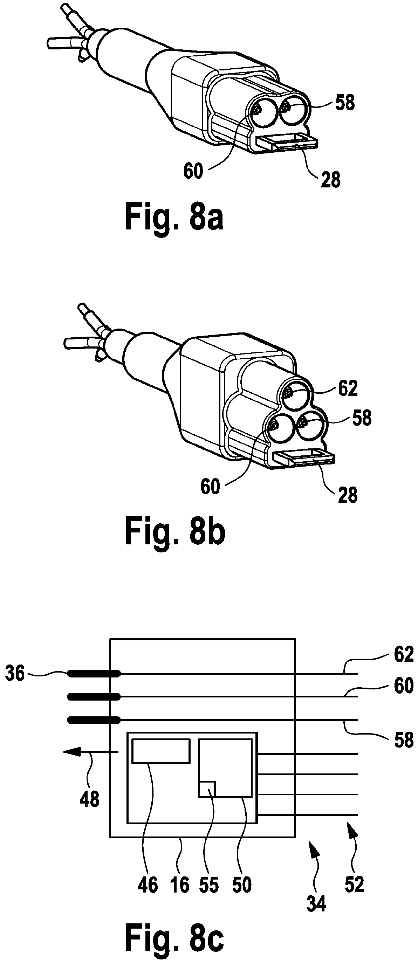

In Fig. 8a, b, c sind weitere Ausführungsformen des Steckverbinders 16 dargestellt. Gleiche Elemente sind mit gleichen Bezugszeichen bezeichnet, wobei hier lediglich die Besonderheiten erläutert sind.

Die Steckverbinder 16 weisen jeweils den Verriegelungsabschnitt 28 auf und zusätzlich zwei der elektrischen Kontakte 36, wie es in Fig. 8a gezeigt ist bzw. drei der elektrischen Kontakte 36, wie es in Fig. 8b gezeigt ist.

Die Ausführungsform aus Fig. 8a weist dabei vorzugsweise einen +60 Volt-Kontakt 60 sowie einen Massekontakt 58 auf, um elektrische Energiespeicher von Fahrrädern wie z.B. Pedelegs und Light-Electric-Vehicles (LEVs) zu laden.

Der Steckverbinder 16 aus Fig. 8b weist einen -120 Volt-Kontakt 62, einen +60 Volt-Kontakt 60 sowie einen Massekontakt 58 auf und dient beispielsweise dazu, elektrisch angetriebene Motorräder oder elektrisch angetriebene Kraftfahrzeuge mit größeren elektrischen Energiespeichern und größerem Energieverbrauch mit elektrischer Energie zu versorgen.

Die Sicherungsvorrichtung 14 kann somit in einer einfachsten Form lediglich zum Sichern des Fahrrads 10 dienen und in alternativen Ausführungsformen zum Laden von elektrischen Energiespeichern mit einer niedrigen Spannung wie +60 Volt oder einer höheren Spannung wie 180 Volt.

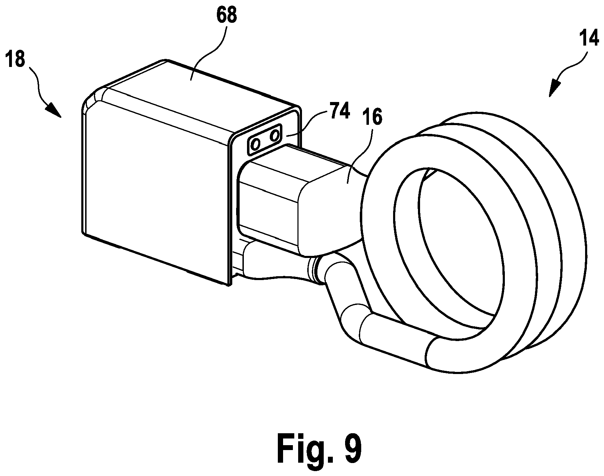

In Fig. 9 ist eine besondere Ausführungsform der Sicherungsvorrichtung 14 bzw. des Verbindungsabschnitts 18 perspektivisch dargestellt. Gleiche Elemente sind mit gleichen Bezugszeichen bezeichnet, wobei hier lediglich die Besonderheiten erläutert sind.

Das Gehäuse 68 des Verbindungsabschnitts 18, der an einem Rahmen des Fahrrads 10 festgelegt ist und entsprechend eine feste Verbindung zu dem Fahrrad 10 bildet, weist eine Steckbuchse 74 auf, die in ihren mechanischen Abmessungen der Steckbuchse 24 entspricht bzw. eine komplementäre Aufnahme für den Steckverbinder 16 bildet. Der Steckverbinder 16 kann in die Steckbuchse 74 eingesteckt und in der Steckbuchse 74 mittels einer hier nicht näher dargestellten Verriegelungsvorrichtung festgelegt werden. Dadurch kann der Steckverbinder 16 während der Fahrt mit geringem Aufwand gesichert werden. Ferner kann durch die Steckbuchse 24 eine einfache Ausführungsform der Sicherungsvorrichtung 14 bereitgestellt werden, indem die Sicherungsvorrichtung 14, sofern keine Sicherungs- und/oder Ladestation 12 vorhanden ist, um einen festen Gegenstand herumgelegt wird und in der Steckbuchse 74 festgelegt und gesichert wird, so dass eine bedingte mechanische Diebstahlsicherung erzielt werden kann. Die Steckbuchse 74 bzw. das Gehäuse 68 weist dafür eine entsprechende Steuerung auf, die die Verriegelungsvorrichtung steuert und beispielsweise mittels eines Funksignals wie z.B. eines RFID-Signals oder eines anderen Funksignals lösen oder entriegeln kann. Dadurch ist eine authentifizierte Freigabe des Steckverbinders 16 aus der Steckbuchse 74 des Verbindungsabschnitts 18 möglich.

In Fig. 10 ist die Ausführungsform der Sicherungsvorrichtung 14 aus Fig. 9 in einem angebauten Zustand an dem Fahrrad 10 perspektivisch dargestellt. Das Fahrrad 10 kann somit einfach gesichert werden, sofern keine Sicherungs- und/oder Ladestation 12 vorhanden ist und der Steckverbinder 16 kann gleichzeitig während der Fahrt stabil an dem Rahmen des Fahrrads 10 gelagert werden.

In Fig. 1 1 ist eine Explosionsdarstellung des Verbindungsabschnitts 18 aus Fig. 9 perspektivisch dargestellt. Gleiche Elemente sind mit gleichen Bezugsziffern bezeichnet, wobei hier lediglich die Besonderheiten erläutert sind.

In dem Gehäuse 68 ist die Steckbuchse 74 angeordnet, die eine zu dem Steckverbinder 16 komplementäre Aufnahme 76 aufweist. Der Aufnahme 76 ist die Verriegelungsvorrichtung 78 zugeordnet, die mittels einer Steuereinheit 80 gesteuert werden kann, um entsprechend den Verriegelungsabschnitt 28 in der Aufnahme 76 festzulegen und zu verriegeln. Die Steckbuchse 74 weist ferner eine Nahfeldfunkempfangseinheit 82 auf mit vorzugsweise einer Spule, um entsprechende Steuersignale zu empfangen, so dass die Verriegelungsvorrichtung 78 beispielsweise mittels eines RFID-Transponders oder eines anderen Funksignals gesteuert bzw. gelöst werden kann.

Dadurch ist ein authentifiziertes Öffnen der Verbindung zwischen dem Steckverbinder 16 und der Steckbuchse 74 möglich.

In Fig. 12 ist ein schematisches Blockdiagramm der Sicherungs- und/oder Ladestation 12 dargestellt. Gleiche Elemente sind mit gleichen Bezugszeichen bezeichnet, wobei hier lediglich die Besonderheiten erläutert sind.

Die Sicherungs- und/oder Ladestation 12 ist in Fig. 12 schematisch mit zwei Steckbuchsen 24 dargestellt, wobei es sich versteht, dass die Station 12 auch eine Vielzahl von weiteren Steckbuchsen 24 bzw. Ladeplätzen aufweisen kann. Die Sicherungs- und/oder Ladestation 12 weist eine Verbindungsschnittstelle 84 auf, an der eine Schnittstelle 86 für elektrische Energie und eine Schnittstelle 88 für das Bus-System 56 gebildet ist. Die elektrische Energie wird jeweils über einen Gleichspannungswandler 90, 92 in unterschiedliche Spannungen gewandelt und entsprechend an den elektrischen Kontakten 40 bereitgestellt, wie oben im Detail erläutert. Das Bus-System 56 ist jeweils mit den Funkempfangseinheiten 44 bzw. den Steuereinheiten 54 verbunden, um die Daten 48 zu empfangen und entsprechend in das Bus-System 56 einzuspeisen. Das Bus-System 56 ist mit den Gleichspannungswandlern 90, 92 verbunden, um die Gleichspannungswandler 90, 92 entsprechend zu steuern und beispielsweise eine entsprechend notwendige Spannung bereitzustellen und beispielsweise die Spannungsversorgung zu unterbrechen, bevor die Verriegelungsvorrichtung 42 gelöst wird, um Lichtbögen an den Kontakten 40 ("Hot-Plugging") zu vermeiden.

Ferner kann eine weitere Funkeinheit 94 mit dem Bus-System 56 verbunden sein, das beispielsweise ein Funksignal von einem Mobiltelefon oder dgl. empfangen kann und entsprechend die Verriegelungsvorrichtung 42 freigeben kann, sofern eine entsprechende Authentifizierung über die Funksignale an der Funkeinheit 94 empfangen wird. Die Funkeinheit 94 kann auch WiFi bzw. WLAN als Hotspot bereitstellen. [00120] Das Bus-System 56 ist über die Schnittstelle 88 mit dem Internet verbunden oder verbindbar, um Informationen aus einer Datenbank oder einem Cloud-Service zu empfangen und beispielsweise für die Authentifizierung des Benutzers zu dienen und beispielsweise die übertragene elektrische Energie zu bezahlen. Weiterhin kann über die Schnittstelle 88 bei einem Durchtrennen des Sicherungselements 30 entsprechend alle relevanten Daten übermittelt werden, um nachträglich eine Verfolgung zu erleichtern.

## Patentansprüche

1. Sicherungsvorrichtung (14) für ein Fahrzeug (10), insbesondere für ein Fahrrad (10), mit:
- einem Verbindungselement (16), das ein erstes Verbindungsglied für eine Verbindungseinheit (22) bildet, wobei das Verbindungselement (16) einen Verriegelungsabschnitt (28) aufweist, um das Verbindungselement (16) an einem komplementären Verbindungselement (24), das ein zweites Verbindungsglied (24) der Verbindungseinheit (22) bildet, festzulegen,
und
- einer Übertragungseinheit (46), die dem Verbindungselement (16) zugeordnet ist, um Signale (48) zu übertragen,
wobei die Verbindungseinheit (22) als Steckverbindung ausgebildet ist, wobei die Übertragungseinheit (46) als Funkübertragungseinheit (46) ausgebildet ist, um die Signale (48) als Funksignale zu übertragen, wobei die Sicherungsvorrichtung (14) eine Steuereinheit (50) aufweist, die mit der Übertragungseinheit (46) verbunden ist, um die Signalübertragung zu steuern, wobei die Übertragungseinheit (46) eine Spule (66) aufweist, die dazu ausgebildet ist, die Funksignale zu übertragen **dadurch gekennzeichnet, dass** die Spule (66) mit der Steuereinheit (50) derart elektrisch verbunden ist, um die Steuereinheit (50) mit elektrischer Energie zu versorgen, dass ein langgestrecktes Sicherungselement (30) vorgesehen ist, das mit einem ersten Endabschnitt mit dem Verbindungselement (16) und mit einem zweiten Endabschnitt mit einem Verbindungsabschnitt (18) verbunden ist und eine mechanische Verbindung zwischen dem Verbindungselement (16) und dem Verbindungsabschnitt (18) bildet, dass der Verbindungsabschnitt (10) ein komplementäres Verbindungselement (74) mit einer Verriegelungsvorrichtung (78) aufweist, um den Verriegelungsabschnitt (28) des Verbindungselements an dem Verbindungsabschnitt festzulegen, und dass der Verbindungsabschnitt (18) eine Funkempfangseinheit (82) aufweist, um Funksignale zu empfangen und/oder dass die Verriegelungsvorrichtung (78) als elektrisch betätigbare Verriegelungsvorrichtung ausgebildet ist.

2. Sicherungsvorrichtung nach Anspruch 1, **dadurch gekennzeichnet, dass** die Übertragungseinheit (46) mit einem mobilen Bus-System (52) des Fahrzeugs (10) verbunden ist, vorzugsweise wobei die Übertragungseinheit (46) eine äußere Schnittstelle des mobilen Bus-Systems (52) bildet.

3. Sicherungsvorrichtung nach einem der Ansprüche 1 bis 2, **dadurch gekennzeichnet, dass** die Übertragungseinheit (46) als Nahfeldfunkeinheit ausgebildet ist.

4. Sicherungsvorrichtung nach einem der Ansprüche 1 bis 3, **dadurch gekennzeichnet, dass** die Übertragungseinheit (46) und die Steuereinheit (50) dazu ausgebildet sind, ldentifikationsdaten der Sicherungsvorrichtung und/oder des Fahrzeugs zu übertragen.

5. Sicherungsvorrichtung nach einem der Ansprüche 1 bis 4, **dadurch gekennzeichnet, dass** die Sicherungsvorrichtung (16) wenigstens eine Datenleitung (34) aufweist, die parallel zu dem langgestreckten Sicherungselement (30) geführt ist, wobei die Steuereinheit mit der Datenleitung verbunden ist und dazu ausgebildet ist, die Verbindung des Verbindungselements mit dem Verbindungsabschnitt über die Datenleitung zu prüfen.

6. Sicherungsvorrichtung nach Anspruch 5, **dadurch gekennzeichnet, dass** die Steuereinheit (50) dazu ausgebildet ist, eine Unterbrechung der Verbindung des Verbindungselements (16) mit dem Verbindungsabschnitt (18) zu erfassen und ein entsprechendes Signal über die Übertragungseinheit an eine Empfangseinheit des komplementären Verbindungselements zu übermitteln.

7. Sicherungsvorrichtung nach einem der Ansprüche 1 bis 6, **dadurch gekennzeichnet, dass** die Sicherungsvorrichtung eine Mehrzahl von elektrischen Leitungen (32) aufweist, die jeweils mit einem elektrischen Kontakt (36) des Verbindungselements (16) und mit einem elektrischen Kontakt (36) des Verbindungsabschnitts (18) verbunden sind, um elektrische Energie mit einem Energiespeicher des Fahrzeugs auszutauschen.

8. Sicherungsvorrichtung nach einem der Ansprüche 1 bis 7, **dadurch gekennzeichnet, dass** der Verbindungsabschnitt (18) dazu ausgebildet ist, an dem Fahrzeug festgelegt zu werden und mit dem Fahrzeug (10) eine mechanisch feste Verbindung zu bilden.

9. Sicherungsvorrichtung nach einem der Ansprüche 1 bis 8, **dadurch gekennzeichnet, dass** die Übertragungseinheit (46) als Sende- und Empfangseinheit ausgebildet ist, um Funksignale zu senden und zu empfangen.

10. Sicherungssystem zum mechanischen Sichern von Fahrzeugen (10), insbesondere von Fahrrädern, mit einer Sicherungsvorrichtung (14) nach einem der Ansprüche 1 bis 9, die mit einem Fahrzeug (10) verbunden ist und mit einer Befestigungsvorrichtung (12)zum Sichern von Fahrzeugen (10), insbesondere von Fahrrädern (10), die einen Teil einer ortsfesten Station (12) bildet, wobei die Übertragungseinheit (46) und die Empfangseinheit (44) eine Funkstrecke zum Übertragen von Funksignalen (48) bilden, wobei die Befestigungsvorrichtung (12) umfasst:
- ein Verbindungselement (24), das ein zweites Verbindungsglied (24) für eine Verbindungseinheit (20) bildet, wobei dem Verbindungselement (24) eine Verriegelungsvorrichtung (42) zugeordnet ist, um einen Verbindungabschnitt (28) eines komplementären Verbindungselements (16), das ein erstes Verbindungsglied (16) der Verbindungseinheit (22) bildet, an der Befestigungsvorrichtung (12) festzulegen, und
- eine Empfangseinheit (44), die dem Verbindungselement (16) zugeordnet ist, um Signale (48) zu empfangen,
wobei die Empfangseinheit (44) als Funkempfangseinheit ausgebildet ist, um die Signale (48) als Funksignale zu empfangen.

11. Sicherungssystem nach Anspruch 10, **dadurch gekennzeichnet, dass** die Empfangseinheit (46) eine Spule aufweist, um die Funksignale (48) zu empfangen und elektrische Energie auf das komplementäre Verbindungselement zu übertragen und/oder dass die Empfangseinheit (44) mit einem ortsfesten Bus-System (56) verbunden ist, vorzugsweise wobei die Empfangseinheit (44) eine äußere Schnittstelle zu dem ortsfesten Bus-System (56) bildet und/oder dass der Empfangseinheit (44) eine Steuereinheit (54) zugeordnet ist, um die empfangenen Funksignale (48) zu verarbeiten.

12. Sicherungssystem nach Anspruch 10 oder 11, **dadurch gekennzeichnet, dass** die Verriegelungsvorrichtung (42) als elektrisch betätigbare Verriegelungsvorrichtung ausgebildet ist und/oder dass die Steuereinheit (54) mit der Verriegelungsvorrichtung (44) verbunden ist, um die Verriegelungsvorrichtung zu betätigen.

13. Sicherungssystem nach Anspruch 12, **dadurch gekennzeichnet, dass** der Steuereinheit (54) eine Eingabeeinheit (94) zugeordnet ist, um der Steuereinheit ein Steuersignal zuzuführen, und wobei die Steuereinheit dazu ausgebildet ist, auf der Grundlage des Steuersignals die Verriegelungsvorrichtung zu betätigen.

14. Sicherungssystem nach einem der Ansprüche 10 bis 13, **dadurch gekennzeichnet, dass** das Verbindungselement (24) eine Mehrzahl von elektrischen Kontakten (40) aufweist, um elektrische Energie mit einem elektrischen Energiespeicher von Fahrzeugen (10) auszutauschen und/oder dass die Empfangseinheit (44) mit einem stationären Datennetz (56) verbunden ist, vorzugsweise wobei die Empfangseinheit (44) über das stationäre Datennetz (56) mit einer Datenbank verbunden oder verbindbar ist.

15. Sicherungssystem nach einem der Ansprüche 10 bis 14, **dadurch gekennzeichnet, dass** die Empfangseinheit (44) als Sende- und Empfangseinheit ausgebildet ist, um Funksignale zu empfangen und zu übertragen.

## Claims

1. Securing device (14) for a vehicle (10), in particular for a bicycle (10), comprising:
- a connecting element (16) which forms a first connecting member for a connecting unit (22), the connecting element (16) having a locking segment (28) in order to fasten the connecting element (16) to a complementary connecting element (24) which forms a second connecting member (24) of the connecting unit (22),
and
- a transmission unit (46), which is associated with the connecting element (16), in order to transmit signals (48),
wherein the connecting unit (22) is designed as a plug-in connection, wherein the transmission unit (46) is designed as a radio transmission unit (46) in order to transmit the signals (48) as radio signals, wherein the securing device (14) comprises a control unit (50) that is connected to the transmission unit (46) in order to control the signal transmission, wherein the transmission unit (46) comprises a coil (66) that is designed to transmit the radio signals, **characterised in that** the coil (66) is electrically connected to the control unit (50) in order to supply the control unit (50) with electrical energy, that an elongate securing element (30) is provided which is connected to the connecting element (16) by means of a first end segment and to a connecting segment (18) by means of a second end segment and forms a mechanical connection between the connecting element (16) and the connecting segment (18), that the connecting segment (10) comprises a complementary connecting element (74) comprising a locking device (78) in order to fasten the locking segment (28) of the connecting element to the connecting segment, and **in that** the connecting segment (18) comprises a radio receiving unit (82) in order to receive radio signals, and/or **in that** the locking device (78) is designed as an electrically actuable locking device.

2. Securing device according to claim 1, **characterised in that** the transmission unit (46) is connected to a mobile bus system (52) of the vehicle (10), the transmission unit (46) preferably forming an external interface of the mobile bus system (52).

3. Securing device according to either of claims 1 to 2, **characterised in that** the transmission unit (46) is designed as a near-field radio unit.

4. Securing device according to any of claims 1 to 3, **characterised in that** the transmission unit (46) and the control unit (50) are designed to transmit identification data of the securing device and/or of the vehicle.

5. Securing device according to any of claims 1 to 4, **characterised in that** the securing device (16) comprises at least one data line (34) that is guided in parallel with the elongate securing element (30), the control unit being connected to the data line and being designed to check the connection between the connecting element and the connecting segment via the data line.

6. Securing device according to claim 5, **characterised in that** the control unit (50) is designed to detect a break in the connection between the connecting element (16) and the connecting segment (18) and to transmit a corresponding signal via the transmission unit to a receiving unit of the complementary connecting element.

7. Securing device according to any of claims 1 to 6, **characterised in that** the securing device comprises a plurality of electrical lines (32) that are each connected to an electrical contact (36) of the connecting element (16) and to an electrical contact (36) of the connecting segment (18) in order to exchange electrical energy with an energy accumulator of the vehicle.

8. Securing device according to any of claims 1 to 7, **characterised in that** the connecting segment (18) is designed to be fastened to the vehicle and to form a mechanically rigid connection to the vehicle (10).

9. Securing device according to any of claims 1 to 8, **characterised in that** the transmission unit (46) is designed as a transceiver unit in order to send and receive radio signals.

10. Securing system for mechanically securing vehicles (10), in particular bicycles, comprising a securing device (14) according to any of claims 1 to 9, that is connected to a vehicle (10), and comprising a fastening device (12) for securing vehicles (10), in particular bicycles (10), that forms a part of a fixed station (12), wherein the transmission unit (46) and the receiving unit (44) form a radio link for transmitting radio signals (48), the fastening device (12) comprising:
- a connecting element (24) which forms a second connecting member (24) for a connecting unit (20), the connecting element (24) being associated with a locking device (42) in order to fasten a locking segment (28) of a complementary connecting element (16), which forms a first connecting member (16) of the connecting unit (22), to the fastening device (12), and
- a receiving unit (44), which is associated with the connecting element (24), in order to receive signals (48), the receiving unit (44) being designed as a radio receiving unit in order to receive the signals (48) as radio signals.

11. Securing system according to claim 10, **characterised in that** the receiving unit (46) comprises a coil in order to receive the radio signals (48) and to transfer electrical energy to the complementary connecting element and/or **in that** the receiving unit (44) is connected to a fixed bus system (56), the receiving unit (44) preferably forming an external interface to the fixed bus system (56), and/or **in that** the receiving unit (44) is associated with a control unit (54) in order to process the received radio signals (48).

12. Securing system according to claim 10 or 11, **characterised in that** the locking device (42) is designed as an electrically actuable locking device and/or **in that** the control unit (54) is connected to the locking device (44) in order to actuate the locking device.

13. Securing system according to claim 12, **characterised in that** the control unit (54) is associated with an input unit (94) in order to supply the control unit with a control signal, and the control unit being designed to actuate the locking device on the basis of the control signal.

14. Securing system according to any of claims 10 to 13, **characterised in that** the connecting element (24) comprises a plurality of electrical contacts (40) in order to exchange electrical energy with an electrical energy accumulator of vehicles (10) and/or **in that** the receiving unit (44) is connected to a stationary data network (56), the receiving unit (44) preferably being connected or connectable to a database via the stationary data network (56).

15. Securing system according to any of claims 10 to 14, **characterised in that** the receiving unit (44) is designed as a transceiver unit in order to receive and transmit radio signals.

## Revendications

1. Dispositif de blocage (14) pour un véhicule (10), en particulier pour une bicyclette (10), avec :
- un élément de liaison (16), qui forme un premier organe de liaison pour une unité de liaison (22), dans lequel l'élément de liaison (16) présente une partie de verrouillage (28), afin de fixer l'élément de liaison (16) à un élément de liaison complémentaire (24), qui forme un deuxième organe de liaison (24) de l'unité de liaison (22),
et
- une unité de transmission (46), qui est associée à l'élément de liaison (16), afin de transmettre des signaux (48),
dans lequel l'unité de liaison (22) est réalisée en tant que liaison enfichable, dans lequel l'unité de transmission (46) est réalisée en tant qu'unité de transmission radio (46), afin de transmettre les signaux (48) en tant que signaux radio, dans lequel le dispositif de blocage (14) présente une unité de commande (50), qui est reliée à l'unité de transmission (46), afin de commander la transmission des signaux, dans lequel l'unité de transmission (46) présente une bobine (66), qui est conçue pour transmettre les signaux radio, **caractérisé en ce que** la bobine (66) est reliée électriquement à l'unité de commande (50) afin d'alimenter l'unité de commande (50) en énergie électrique qu'un élément de blocage (30) de forme allongée est prévu, qui est relié avec une première partie d'extrémité à l'élément de liaison (16) et avec une deuxième partie d'extrémité à une partie de liaison (18) et forme une liaison mécanique entre l'élément de liaison (16) et la partie de liaison (18), que la partie de liaison (10) présente un élément de liaison complémentaire (74) avec un dispositif de verrouillage (78), afin de fixer la partie de verrouillage (28) de l'élément de liaison sur la partie de liaison, et que la partie de liaison (18) présente une unité de réception radio (82), afin de recevoir des signaux radio et/ou que le dispositif de verrouillage (78) soit réalisé en tant que dispositif de verrouillage pouvant être actionné électriquement.

2. Dispositif de blocage selon la revendication 1, **caractérisé en ce que** l'unité de transmission (46) est reliée à un système de bus mobile (52) du véhicule (10), de préférence dans lequel l'unité de transmission (46) forme une interface extérieure du système de bus mobile (52).

3. Dispositif de blocage selon l'une quelconque des revendications 1 à 2, **caractérisé en ce que** l'unité de transmission (46) est réalisée en tant qu'unité radio en champ proche.

4. Dispositif de blocage selon l'une quelconque des revendications 1 à 3, **caractérisé en ce que** l'unité de transmission (46) et l'unité de commande (50) sont conçues pour transmettre des données d'identification du dispositif de blocage et/ou du véhicule.

5. Dispositif de blocage selon l'une quelconque des revendications 1 à 4, **caractérisé en ce que** le dispositif de blocage (16) présente au moins une ligne de données (34), qui est guidée parallèlement à l'élément de blocage (30) de forme allongée, dans lequel l'unité de commande est reliée à la ligne de données et conçue pour contrôler la liaison de l'élément de liaison à la partie de liaison par l'intermédiaire de la ligne de données.

6. Dispositif de blocage selon la revendication 5, **caractérisé en ce que** l'unité de commande (50) est conçue pour détecter une interruption de la liaison de l'élément de liaison (16) à la partie de liaison (18) et pour transmettre un signal correspondant à une unité de réception de l'élément de liaison complémentaire par l'intermédiaire de l'unité de transmission.

7. Dispositif de blocage selon l'une quelconque des revendications 1 à 6, **caractérisé en ce que** le dispositif de blocage présente une pluralité de lignes électriques (32), qui sont reliées respectivement à un contact électrique (36) de l'élément de liaison (16) et à un contact électrique (36) de la partie de liaison (18), afin d'échanger de l'énergie électrique avec un accumulateur d'énergie du véhicule.

8. Dispositif de blocage selon l'une quelconque des revendications 1 à 7, **caractérisé en ce que** la partie de liaison (18) est conçue pour être fixée au véhicule et former avec le véhicule (10) une liaison mécaniquement fixe.

9. Dispositif de blocage selon l'une quelconque des revendications 1 à 8, **caractérisé en ce que** l'unité de transmission (46) est réalisée en tant qu'unité d'émission et de réception, afin d'envoyer et de recevoir des signaux radio.

10. Système de blocage pour le blocage mécanique de véhicules (10), en particulier de bicyclettes, avec un dispositif de blocage (14) selon l'une quelconque des revendications 1 à 9, qui est relié à un véhicule (10) et avec un dispositif de fixation (12) destiné à bloquer des véhicules (10), en particulier des bicyclettes (10), qui forme une partie d'une station (12) fixée à demeure, dans lequel l'unité de transmission (46) et l'unité de réception (44) forment une liaison radio pour la transmission de signaux radio (48), dans lequel le dispositif de fixation (12) comporte :
- un élément de liaison (24), qui forme un deuxième organe de liaison (24) pour une unité de liaison (20), dans lequel un dispositif de verrouillage (42) est associé à l'élément de liaison (24), afin de fixer une partie de liaison (28) d'un élément de liaison complémentaire (16), qui forme un premier organe de liaison (16) de l'unité de liaison (22), au dispositif de fixation (12), et
- une unité de réception (44), qui est associée à l'élément de liaison (16), afin de recevoir des signaux (48),
dans lequel l'unité de réception (44) est réalisée en tant qu'unité de réception radio, afin de recevoir les signaux (48) en tant que signaux radio.

11. Système de blocage selon la revendication 10, **caractérisé en ce que** l'unité de réception (46) présente une bobine, afin de recevoir les signaux radio (48) et de transmettre l'énergie électrique à l'élément de liaison complémentaire et/ou que l'unité de réception (44) est reliée à un système de bus (56) fixé à demeure, de préférence dans lequel l'unité de réception (44) forme une interface extérieure par rapport au système de bus (56) fixé à demeure et/ou qu'une unité de commande (54) est associée à l'unité de réception (44), afin de traiter les signaux radio (48) reçus.

12. Système de blocage selon la revendication 10 ou 11, **caractérisé en ce que** le dispositif de verrouillage (42) est réalisé en tant que dispositif de verrouillage pouvant être actionné électriquement et/ou que l'unité de commande (54) est reliée au dispositif de verrouillage (44), afin d'actionner le dispositif de verrouillage.

13. Système de blocage selon la revendication 12, **caractérisé en ce qu'**une unité d'entrée (94) est associée à l'unité de commande (54), afin d'amener un signal de commande à l'unité de commande, et dans lequel l'unité de commande est conçue pour actionner le dispositif de verrouillage sur la base du signal de commande.

14. Système de blocage selon l'une quelconque des revendications 10 à 13, **caractérisé en ce que** l'élément de liaison (24) présente une pluralité de contacts électriques (40), afin d'échanger de l'énergie électrique avec un accumulateur d'énergie électrique de véhicules (10) et/ou que l'unité de réception (44) est reliée à un réseau de données (56) stationnaire, de préférence dans lequel l'unité de réception (44) est reliée ou peut être reliée à une base de données par l'intermédiaire du réseau de données (56) stationnaire.

15. Système de blocage selon l'une quelconque des revendications 10 à 14, **caractérisé en ce que** l'unité de réception (44) est réalisée en tant qu'unité d'émission et de réception, afin de recevoir et de transmettre des signaux radio.
